# EUROPEAN PATENT APPLICATION

(11) **EP 4 765 343 A1**
(43) Date of publication of application: **24.06.2026**
(21) Application number: 25861079.9
(22) Date of filing: 10.07.2025
(51) Int. Cl.: H01M 10/6571, H01M 10/63, H01M 10/615, H01M 10/627, H01M 10/42, H05B 1/02, H05B 3/00

(54) **BATTERY SYSTEM COMPRISING HEATER AND OPERATING METHOD THEREOF**

(30) Priority: 29.08.2024 KR 20240116354
(71) Applicant: LG Energy Solution, Ltd., Seoul 07335 (KR)
(72) Inventor: HWANG, Jin Woo, Daejeon 34122 (KR); KIM, Jaehwan, Daejeon 34122 (KR)
(74) Representative: BCKIP Part mbB
(86) International application number: PCT/KR2025/010066
(87) International publication number: WO 2026/049282

(57) **Abstract**

A battery system according to an embodiment of the present invention may comprise: a plurality of battery assemblies; a plurality of heaters that correspond to respective battery assemblies and are arranged to be connected in series on a heater driving path; and a battery management device for monitoring and managing the battery assemblies and the heaters. The battery management device may control a heater driving switch disposed on the heater driving path so as to turn the heaters on or off simultaneously.

## Description

### [Technical Field]

This application claims priority to and the benefit of Korean Patent Application No.10-2024-0116354 filed in the Korean Intellectual Property Office on August 29, 2024 the entire contents of which are incorporated herein by reference.

The present invention relates to a battery system and an operating method thereof, and more particularly, to a battery system including a plurality of heaters arranged corresponding each of battery assemblies and an operating method thereof.

### [Background Art]

Secondary batteries, capable of recharging and reuse, may be used as an energy source for small devices such as mobile phones, tablet PCs and vacuum cleaners, and also used as an energy source for medium and large devices such as automobiles and an energy storage system (ESS) for smart grids.

Secondary batteries may be applied to a system in a form of an assembly such as a battery pack in which multiple battery cells are electrically connected or a battery rack in which battery packs are electrically connected according to system requirements. For an ESS for smart grids, a high-capacity battery system with a plurality of battery racks connected in parallel can be applied to satisfy required capacity of the system.

For anode active materials in lithium secondary batteries, carbon materials are primarily used, while lithium-containing cobalt oxide (LiCoO₂) is primarily used as cathode active materials. Other materials, such as lithium-containing manganese oxide (LiMnO₂, LiMn₂O₄, etc.) and lithium-containing nickel oxide (LiNiO₂), are also being considered.

Recently, lithium iron phosphate (LiFePO₄) compounds have been used as cathode active materials in lithium secondary batteries. Lithium Iron Phosphate (LFP) batteries, which use lithium iron phosphate as a cathode active material, offer superior thermal stability and cost-effectiveness compared to other type of batteries. However, lithium iron phosphate batteries suffer from significant reductions in battery capacity and output in low-temperature environments.

Therefore, heaters such as heat pads, may be applied to battery systems employing LFP batteries to heat battery cells in low-temperature conditions.

Typically, heaters are installed within a battery pack and controlled by a pack battery management system (PBMS). For a battery system including a plurality of battery packs, each heater is individually controlled by its corresponding PBMS, which increases the system manufacturing cost and makes integrated management and control of the heaters difficult.

Among the prior art documents relevant to the present invention, KR 10-2022-0054485 A is of some relevance.

### [Detailed Description of the Invention]

### [Technical Problem]

To obviate one or more problems of the related art, embodiments of the present disclosure provide a battery system including a plurality of heaters arranged corresponding each of battery assemblies.

To obviate one or more problems of the related art, embodiments of the present disclosure also provide an operating method of the battery system.

To obviate one or more problems of the related art, embodiments of the present disclosure also provide a controller included in the battery system.

### [Technical Solution]

In order to achieve the objective of the present disclosure, a battery system may include a plurality of battery assemblies; a plurality of heaters, each corresponding to one of the battery assemblies and connected in series along a heater drive path; and a battery management apparatus configured to monitor and manage the battery assemblies and the heaters. Here, the battery management apparatus may control a heater drive switch arranged on the heater drive path to simultaneously turn the heaters ON or OFF.

The battery management apparatus may measure a current value flowing along the heater drive path when the heater drive switch is switched to a closed state and determines whether there is an abnormality in the heater or the heater drive path based on the measured current value.

The battery management apparatus may determine whether there is an abnormality in the heater or the heater drive path based on whether the measured current value falls outside a threshold range predetermined based on a voltage applied to the heaters and resistance values of the heaters.

The battery management apparatus may determine that an open fault has occurred in the heater or the heater drive path if the measured current value is below a predetermined first threshold current value.

The battery management apparatus may determine that a resistance change in the heater or a short-circuit fault in the heater drive path has occurred, if the measured current value exceeds a predetermined second threshold current value.

One end of the heater drive path may be connected to the positive line of the battery system and the other end of the heater drive path may be connected to the negative line of the battery system. Here, the heaters may be driven by voltages output from batteries included in each of the battery assemblies.

The battery management apparatus may include a current sensor that calculates a current value flowing through a first shunt resistor and a second shunt resistor arranged on the positive line or the negative line. Here, one end or the other end of the heater drive path is connected between the first shunt resistor and second shunt resistor.

The battery management apparatus may calculate a current value flowing through the heater drive path based on a difference between a first current value flowing through the first shunt resistor and a second current value flowing through the second shunt resistor.

The battery management apparatus may further be configured to, upon the battery system in charge mode, calculate the current value flowing through the heater drive path by subtracting the first current value from the second current value, and upon the battery system in discharge mode, calculate the current value flowing through the heater drive path by subtracting the second current value from the first current value.

According to another embodiment of the present disclosure, a method of operating a battery system may be performed by a battery management apparatus, arranged being connected to a plurality of heaters, each corresponding to one of the battery assemblies and connected in series along a heater drive path. Here, the method of operating the battery system may include controlling a heater drive switch arranged on the heater drive path to simultaneously turn on the heaters; measuring a current value flowing along the heater drive path; and determining whether there is an abnormality in the heater or the heater drive path based on the measured current value.

The determining whether there is an abnormality may include determining whether there is an abnormality in the heater or the heater drive path based on whether the measured current value falls outside a threshold range predetermined based on a voltage applied to the heaters and resistance values of the heaters.

The determining whether there is an abnormality may include determining that an open fault has occurred in the heater or the heater drive path, if the measured current value is below a predetermined first threshold current value.

The determining whether there is an abnormality may include determining that a resistance change in the heater or a short-circuit fault in the heater drive path has occurred, if the measured current value exceeds a predetermined second threshold current value.

One end of the heater drive path may be connected to the positive line of the battery system and the other end of the heater drive path may be connected to the negative line of the battery system. Here, the heaters may be driven by voltages output from batteries included in each of the battery assemblies.

The battery management apparatus may include a current sensor that calculates a current value flowing through a first shunt resistor and a second shunt resistor arranged on the positive line or the negative line. Here, one end or the other end of the heater drive path is connected between the first shunt resistor and second shunt resistor.

The measuring of the current value flowing along the heater drive path may include calculating a current value flowing through the heater drive path based on a difference between a first current value flowing through the first shunt resistor and a second current value flowing through the second shunt resistor.

The measuring of the current value flowing along the heater drive path may include, upon the battery system in charge mode, calculating the current value flowing through the heater drive path by subtracting the first current value from the second current value, and upon the battery system in discharge mode, calculating the current value flowing through the heater drive path by subtracting the second current value from the first current value.

According to another embodiment of the present disclosure, a controller may be located in a battery management apparatus that is connected to a plurality of heaters, each corresponding to one of the battery assemblies and connected in series along a heater drive path.

The controller may include at least one processor; and a memory configured to store at least one instruction executed by the at least one processor. Here, the at least one instruction may include an instruction to control a heater drive switch arranged on the heater drive path to simultaneously turn on the heaters; an instruction to measure a current value flowing along the heater drive path; and an instruction to determine whether there is an abnormality in the heater or the heater drive path based on the measured current value.

### [Advantageous Effects]

According to embodiments of the present disclosure, an upper battery management apparatus of battery assemblies can comprehensively manage and control heaters provided in each battery assembly.

### [Brief Description of the Drawings]

FIG. 1 is a block diagram of a general energy storage system.
FIG. 2 illustrates a structure of a general battery rack.
FIG. 3 is a block diagram of a battery system according to embodiments of the present invention.
FIG. 4 is a circuit diagram of a battery management apparatus according to embodiments of the present invention.
FIG. 5 is a circuit diagram of a battery system according to embodiments of the present invention.
FIG. 6 is an operational flowchart of a method of operating a battery system according to embodiments of the present invention.
FIGS. 7 and 8 are reference diagrams for explaining the method of operating a battery system according to embodiments of the present invention.
FIG. 9 is a block diagram of a controller according to embodiments of the present invention.

100: battery management apparatus
110: controller
120: heater drive switch
130: current sensor
200: battery assembly
210: battery
220: heater
900: controller

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A battery cell is a basic unit that serves to store power and a battery module refers to an assembly in which a plurality of battery cells is electrically connected.

A battery rack may refer to a system of a single structure which is assembled by connecting module units set by a battery manufacturer in series/parallel and may be monitored and controlled by a battery management system (BMS). A battery rack may include several battery modules and a battery protection unit or any other protection device. Here, the battery module may also be referred to as a battery pack depending on a device or system in which the battery is used.

A battery bank refers to a group of large-scale battery rack systems configured by connecting a plurality of battery racks in parallel. A bank BMS for a battery bank may monitor and control several rack BMSs, each of which manages a battery rack.

A battery assembly may include a plurality of electrically connected battery cells, and refers to an assembly that functions as a power supply source by being applied to a specific system or device. Here, the battery assembly may mean a battery module, a battery pack, a battery rack, or a battery bank, but the scope of the present invention is not limited to these entities.

A battery system controller (BSC) refers to an apparatus that controls the topmost level of a battery system including a battery bank level structure or a multiple bank level structure.

State of Charge (SOC) refers to a current state of charge of a battery, represented in percent points [%], and State of Health (SOH) refers to a current condition of a battery compared to its ideal or original conditions, represented in percent points [%].

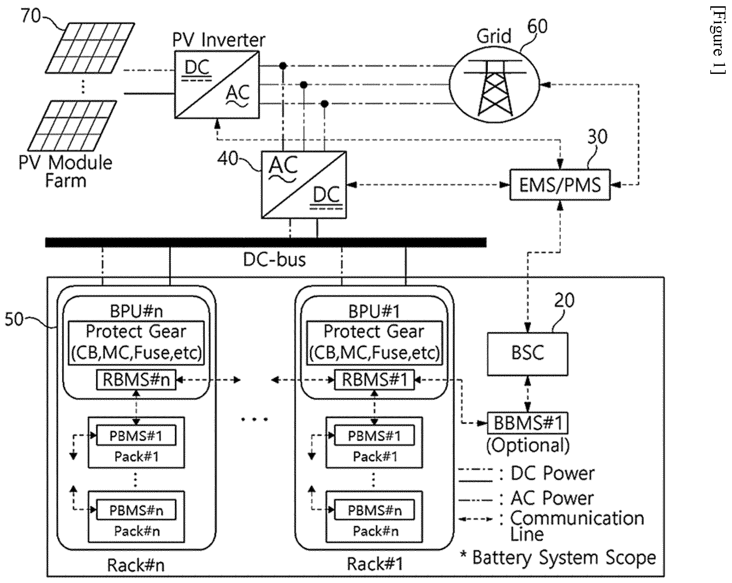

FIG. 1 is a block diagram of a general energy storage system.

Typically, a battery cell is a basic unit of battery for storing power in an energy storage system (ESS). A seris/parallel combination of battery cells may form a battery pack and a plurality of battery packs may form a battery rack. In other words, a battery rack as a series/parallel combination of battery packs may be a basic unit of a battery system. Here, a battery pack may be referred to as a battery module depending on a device or a system in which the battery is used.

Referring to FIG. 1, a battery rack may include a plurality of battery packs and a battery protection unit (BPU) 50 or protection device. A battery rack may be monitored and controlled through a rack battery management system (rack BMS). The RBMS may monitor a current, a voltage and a temperature of each battery rack to be managed, calculate a state Of charge (SOC) of the battery based on a monitoring result, and control charging and discharging.

Meanwhile, the BPU 50 is a device for protecting the battery from abnormal current and fault current in a battery rack. The BPU may include a main contactor MC, a fuse, a circuit breaker CB, or a disconnect switch DS. The BPU may control the battery system rack by rack by controlling the main contactor on/off according to control of the RBMS. The BPU may also protect the battery from short-circuit current by using a fuse when a short-circuit occurs. As such, a general battery system may be controlled through a protection device such as a BPU or a switch gear.

Meanwhile, a battery system controller (BSC) 20 may be installed to monitor and control objects such as a voltage, a current, a temperature, and a circuit breaker, in each battery section including a plurality of batteries, peripheral circuits, and devices. The battery system controller is a top-level controller of a bank-level battery system including a plurality of battery racks and is also used as a controller in a battery system with a multiple bank-level structure. Here, a bank-level battery system may each include a Bank BMS (BBMS), and the BBMS may monitor and control each rack by interfacing with the RBMSs of the battery racks managed by the battery system.

Furthermore, a power conversion system (PCS) 40 installed in each battery section controls charging and discharging of the battery by controlling power supplied from an external source and power supplied from the battery section to the external, and may include a DC/AC inverter. Meanwhile, if the ESS system is interfacing with a photovoltaic (PV; solar power generation system) module farm 70, a PV inverter may be included.

Meanwhile, the output of each BPU may be connected to the PCS 40 which is connected to a power grid 60, through a DC bus. In addition, an energy management system (EMS)/power management system (PMS) 30 may control the energy storage system in overall.

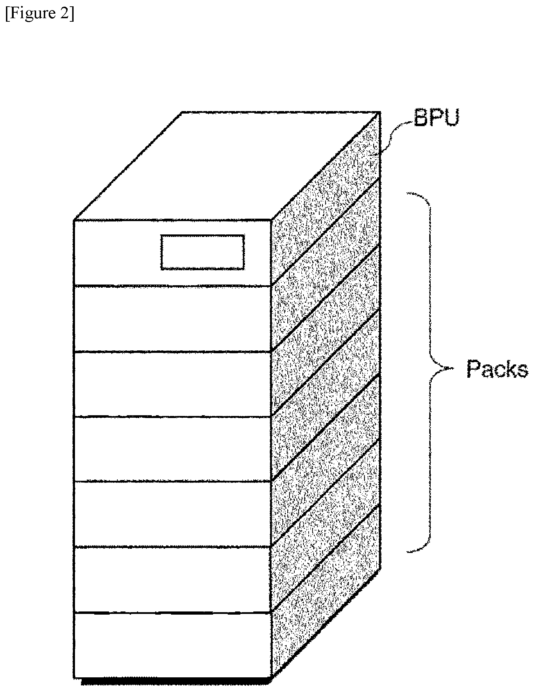

FIG. 2 illustrates a structure of a general battery rack.

The battery rack may include a battery protection unit (BPU) and a plurality of battery packs. Here, the BPU and the plurality of battery packs may be connected in a vertically stacked structure.

The BPU, located at the top of the battery rack, may include a rack BMS (RBMS) which includes a microcontroller unit (MCU), memory, a Switching Mode Power Supply (SMPS), and a current sensor.

Each of the battery packs positioned below the BPU may include a plurality of batteries and a pack battery management system (PBMS) that monitors and manages the batteries.

The batteries within each battery pack may be electrically connected in series and/or parallel and connected to power terminals provided in the BPU, thereby connecting to a direct current (DC) link.

Each battery pack may be equipped with a heater to increase battery temperature. For example, in the case of a battery pack using LFP batteries, a heat pad may be installed near the battery to address the issue of significantly reduced battery capacity and output in low-temperature environments and the pack BMS (PBMS) may control ON/OFF operation of the heat pad.

As illustrated in FIG. 2, in the case of a battery rack comprising a plurality of battery packs, the heat pads applied to each battery pack are individually controlled by their corresponding PBMSs, which increases manufacturing cost of the battery rack and makes integrated management and control of heat pads difficult.

The present invention is proposed to address these issues, and various embodiments of the present invention will be described in detail below, with reference to the accompanying drawings.

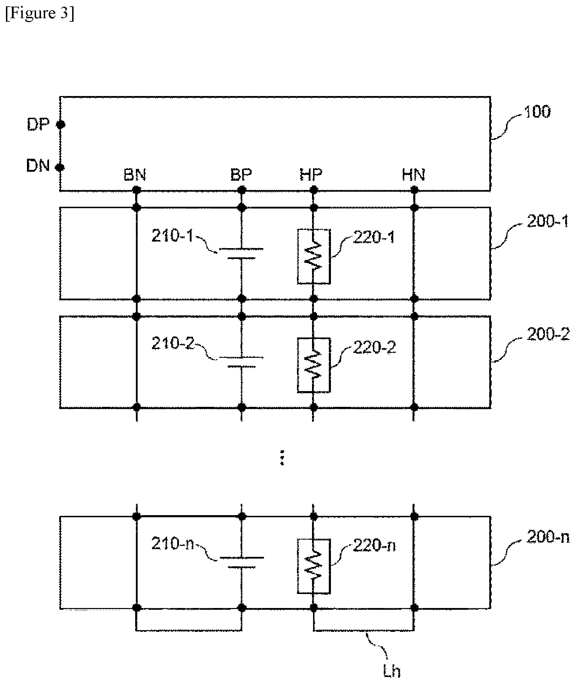

FIG. 3 is a block diagram of a battery system according to embodiments of the present invention.

Referring to FIG. 3, a battery system may include a battery management apparatus 100 and a plurality of battery assemblies 200-1 to 200-n.

In the present disclosure, a battery assembly may refer to a battery pack, but the scope of the present invention is not limited to these entities. For example, a battery assembly may mean to a battery module, a battery rack, or a battery bank.

Each of the battery assemblies 200-1 to 200-n may include a plurality of batteries 210-1 to 210-n and a BMS that manages and controls the batteries. For example, a battery assembly may correspond to a battery pack and include a plurality of battery cells and a pack BMS (PBMS).

The plurality of batteries 210-1 to 210-n may be connected in series and/or parallel to form a set of batteries. The set of batteries may be connected to a charge/discharge terminal provided on the battery management apparatus 100 and electrically connected to a DC link.

For example, as illustrated in FIG. 3, a plurality of batteries 210-1 to 210-n may be connected in series with each other, and the battery positive terminal and battery negative terminal of the uppermost battery assembly (200-1) may be connected to the positive charge/discharge terminal BP and the negative charge/discharge terminal BN, respectively of the battery management apparatus 100, respectively. Here, the positive charge/discharge terminal BP and the negative charge/discharge terminal BN may be electrically connected to the positive DC link terminal DP and the negative DC link terminal DN, respectively, within the battery management apparatus 100. Accordingly, a set of batteries 210-1 to 210-n connected in series with each other may be connected to the DC link.

Each of the battery assemblies 200-1 to 200-N may include heaters 220-1 to 220-n for heating the batteries.

The heaters 220-1 to 220-n may be connected in series with each other along a heater drive path Lh. Here, the series-connected heaters 220-1 to 220-n may electrically connected to the set of batteries 210-1 to 210-n and be driven by the voltage output from the set of batteries 210-1 to 210-n. In other words, the heater drive path Lh may include serially connected heaters 220-1 to 220-n. One end of the heater drive path Lh is connected to the positive electrode of the set of batteries 210-1 to 210-n and the other end of the heater drive path Lh is connected to the negative electrode of the set of batteries 210-1 to 210-n. Thus, the heaters 220-1 to 220-n may operate by receiving power from the set of batteries 210-1 to 210-n.

For example, as illustrated in FIG. 3, the heaters 220-1 to 220-n are serially connected to each other on the heater drive path Lh, and the heater positive terminal and heater negative terminal of the uppermost battery assembly 200-1 may be connected to the positive power supply terminal HP and the negative power supply terminal HN, respectively, of the battery management apparatus 100. Here, the positive power supply terminal HP and the negative power supply terminal HN may be electrically connected to the positive line Lp and the negative line Ln, respectively, formed inside the battery management apparatus 100. Accordingly, the heaters 220-1 to 220-n can be driven by the voltage output from the set of batteries 210-1 to 210-n.

The battery management apparatus 100 may be located inside the BPU.

The battery management apparatus 100 may be an upper control apparatus of a BMS included in each of battery assemblies 200-1 to 200-n. For example, the battery management apparatus may be a rack BMS (RBMS) that manages a plurality of battery packs.

The battery management apparatus 100 may monitor and manage the battery assemblies 200-1 to 200-n and heaters included in each of the battery assemblies 200-1 to 200-n.

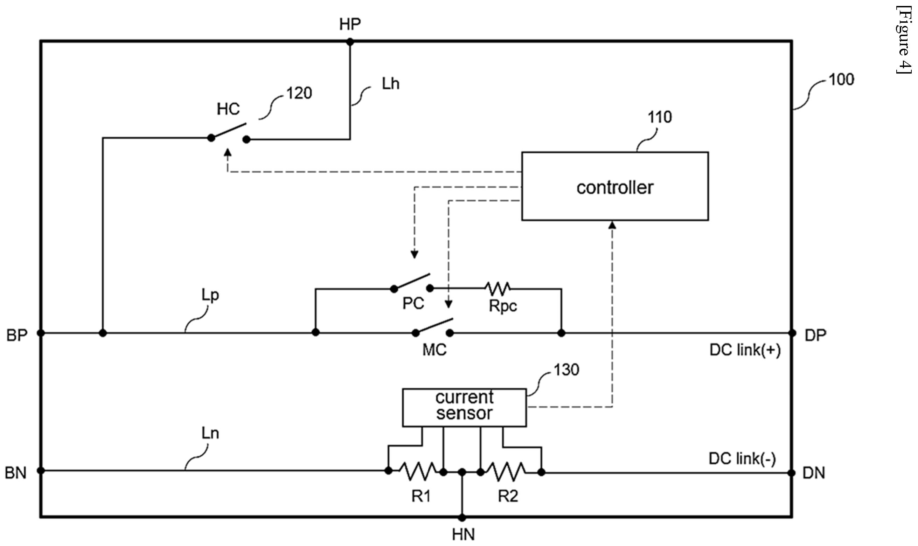

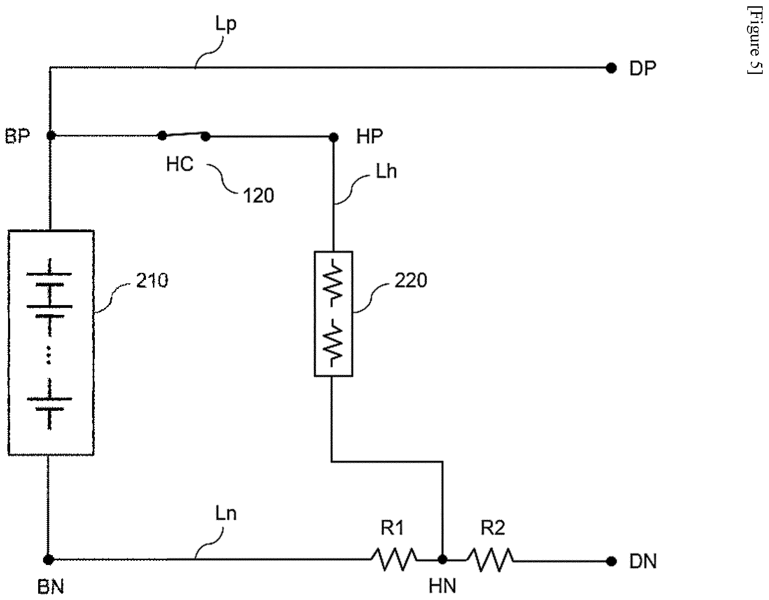

FIG. 4 is a circuit diagram of a battery management apparatus according to embodiments of the present invention and FIG. 5 is a circuit diagram of a battery system according to embodiments of the present invention.

Referring to FIG. 4, a plurality of terminals may be provided on the outer surface of the battery management apparatus 100. Here, the terminals may include a positive charge/discharge terminal BP, a negative charge/discharge terminal BN, a positive direct current (DC) link terminal DP, a negative DC link terminal DN, a positive power supply terminal HP, and a negative power supply terminal HN.

Referring to FIGS. 4 and 5, the positive charge/discharge terminal BP and the negative charge/discharge terminal BN may be connected to the positive and negative terminals of a set of batteries 210, respectively.

The positive charge/discharge terminal BP may be connected to the positive DC link terminal DP via a positive line Lp and the negative charge/discharge terminal BN may be connected to the negative DC link terminal DN via a negative line Ln.

A main contactor MC is positioned on the positive line Lp, and a pre-charge switch PC and a pre-charge resistor Rpc may be connected in parallel with the main contactor MC.

The controller 110 may control the electrical connection between the set of batteries and the DC link by turning the main contactor MC and the pre-charge switch PC on/off.

The current sensor 130 may be configured to measure the current flowing on the positive line Lp or the negative line Ln. For example, as illustrated in FIG. 4, a first shunt resistor R1 and a second shunt resistor R2 are positioned on the negative line Ln, and the current sensor 130 may measure the voltage across the first shunt resistor R1 and the voltage across the second shunt resistor R2 to calculate the current value flowing through the first shunt resistor R1 and the second shunt resistor R2.

Referring to FIG. 5, the positive power supply terminal HP may be connected to one end of the series-connected heaters 220 and the negative power supply terminal HN may be connected to the other end of the series-connected heaters 220. Here, the negative power supply terminal HN may be connected to a node between the first shunt resistor R1 and the second shunt resistor R2.

Referring to FIGS. 4 and 5, the positive power supply terminal HP may be connected to the positive charge/discharge terminal BP. Here, a heater drive switch (HC) 120 may be positioned on the path connecting the positive power supply terminal HP and the positive charge/discharge terminal BP.

In other words, a heater drive path Lh may be formed by electrically connecting the positive charge/discharge terminal BP, the positive power supply terminal HP, the serially connected heaters 220, and the negative power supply terminal HN. In addition, a heater drive switch (HC) 120 may be arranged on the heater drive path Lh.

The controller 110 may control the heater drive switch (HC) 120 to simultaneously turn the serially connected heaters ON or OFF. In more specific, the controller 110 may simultaneously turn on the heaters by switching the heater drive switch (HC) 120 to a closed state while the main contactor MC is turned on. Furthermore, the controller 110 may simultaneously turn off the heaters by switching the heater drive switch (HC) 120 to an open state.

The controller 110 may measure the current value flowing on the heater driving path Lh in the closed state of the heater driving switch 120 and determine whether there is an abnormality in one or more of the heaters 220 and the heater driving path Lh based on the measured current value. Here, the controller 110 may determine whether there is an abnormality in the heaters 220 or the heater driving path Lh based on whether the current value flowing on the heater driving path Lh is outside a predetermined threshold range.

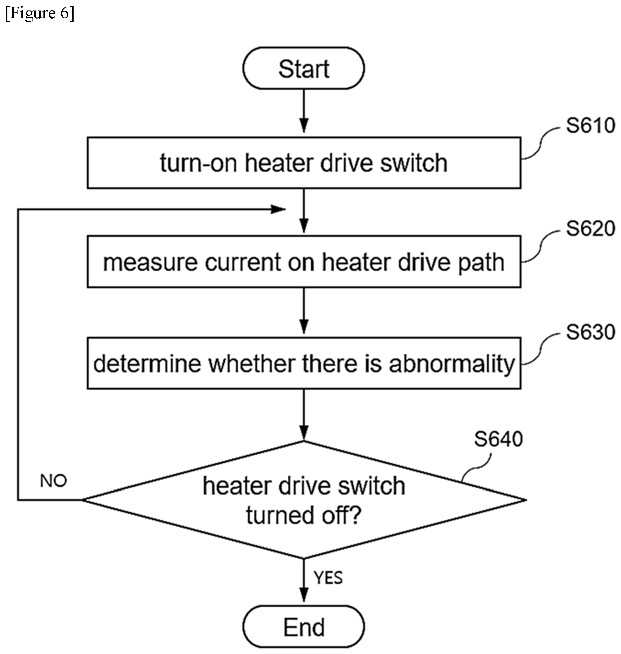

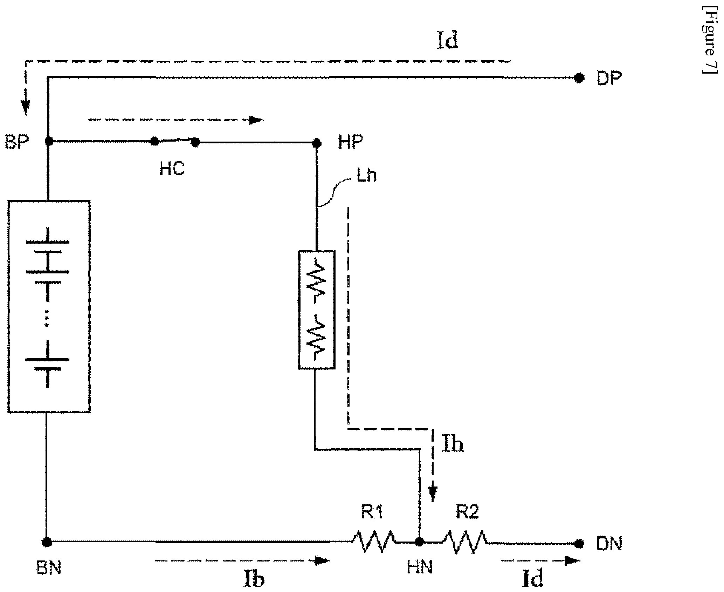

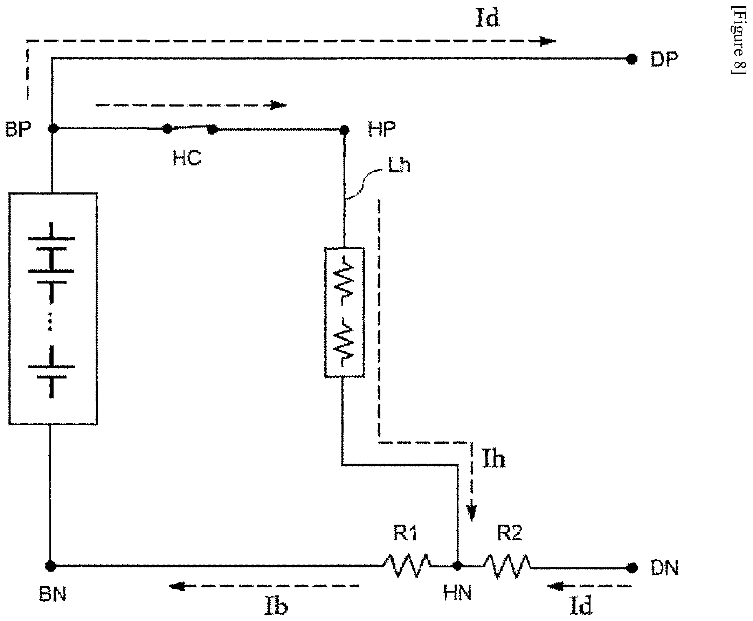

FIG. 6 is an operational flowchart of a method of operating a battery system according to embodiments of the present invention, and FIGS. 7 and 8 are reference diagrams for explaining the method of operating a battery system according to embodiments of the present invention.

The battery management apparatus may control a heater drive switch (HC) positioned on a heater drive path Lh to simultaneously turn the heaters on (S610).

The battery management apparatus may measure a current value flowing on the heater drive path Lh (S620).

The battery management apparatus may calculate the current value flowing on the heater drive path Lh based on the difference between a first current value flowing through the first shunt resistor R1 and a second current value flowing through the second shunt resistor R2. More specifically, the controller 110 of the battery management apparatus may receive the first current value flowing through the first shunt resistor R1 and the second current value flowing through the second shunt resistor R2 from the current sensor 130. Thereafter, the controller 110 may calculate the current value flowing along the heater drive path Lh by calculating the difference between the first current value and the second current value.

If the battery system is in a charge mode, the battery management apparatus may calculate the current value flowing along the heater drive path Lh by subtracting the first current value from the second current value.

Specifically, referring to FIG. 7, if the battery system is in a charge mode, the current (Id) input from the DC link may be diverged into the set of battery side path and the heater drive path Lh. Accordingly, the second current value Id flowing through the second shunt resistor R2 is equal to the sum of the current Ih flowing along the heater drive path Lh and the first current value Ib flowing through the first shunt resistor R1. The controller 110 may receive the first current value Ib and the second current value Id from the current sensor 130, and may calculate the current value Ih flowing along the heater drive path Lh by subtracting the first current value Ib from the second current value Id (Ih = Id - Ib).

When the battery system is in a discharge mode, the battery management apparatus may calculate a current value flowing along the heater drive path Lh by subtracting the second current value from the first current value.

Specifically, referring to FIG. 8, when the battery system is in a discharge mode, the current Ib output from the set of batteries may be divided into a path output to the DC link and a path output to the heater drive path Lh. Accordingly, the first current value (Ib) flowing through the first shunt resistor R1 is equal to the sum of the current Ih flowing on the heater driving path Lh and the second current value Id flowing through the second shunt resistor R2. The controller 110 may receive the first current value Ib and the second current value Id from the current sensor 130 and may calculate the current value Ih flowing on the heater driving path Lh by subtracting the second current value Id from the first current value Ib (Ih = Ib - Id).

Referring back to FIG. 6, the battery management apparatus may determine whether there is an abnormality in the heater or the heater drive path Lh based on the current value Ih flowing along the heater drive path Lh (S630).

The battery management apparatus may determine whether there is an abnormality in the heater or the heater drive path Lh based on whether the current value Ih flowing along the heater drive path Lh falls outside a predetermined threshold range.

The threshold range may be defined as a value greater than or equal to a first threshold current value and less than or equal to a second threshold current value. Here, if the current value Ih flowing along the heater drive path Lh falls outside the predetermined threshold range, the battery management apparatus may determine that there is an abnormality in the heater or the heater drive path Lh.

The threshold range may be predetermined based on the voltage Vbat applied to the heaters and the resistance value Rh of the heaters. For example, the first threshold current value may be defined as a value which is calculated by subtracting a first diagnostic margin value from a reference current value Vbat/Rh which is derived by dividing the voltage Vbat applied to the heaters with the resistance value Rh of the heaters. The second threshold current value may be defined as a value which is calculated by adding a second diagnostic margin value to the reference current value Vbat/Rh. Meanwhile, the first and second diagnostic margin values may be derived through pre-testing.

If the current value Ih flowing along the heater drive path Lh is less than the first threshold current value, the battery management apparatus may determine that an open fault has occurred in the heater or the heater drive path. For example, if the current value Ih flowing along the heater drive path Lh is measured to be 0.05 A, which is less than the first threshold current value of 0.1 A, the battery management apparatus may determine that an open fault has occurred in the heater or the heater drive path.

If the current value Ih flowing along the heater drive path Lh exceeds the second threshold current value, the battery management apparatus may determine that a resistance change in the heater or a short-circuit failure in the heater drive path has occurred. For example, if the current value Ih flowing along the heater drive path Lh is measured as 2A, which exceeds the second threshold current value of 1.2A, the battery management apparatus may determine that a resistance value of one of the heaters has changed (decreased) or a short-circuit failure has occurred in the heater drive path.

The battery management apparatus may determine whether the heater drive switch has been switched to an open state (turned off) (S640), and terminate monitoring, if the heater drive switch has been switched to the open state (YES in S640). If the heater drive switch remains closed (NO in S640), the battery management apparatus may return to S620 and may determine whether there is an abnormality in the heater or the heater drive path Lh, based on the current value Ih flowing along the heater drive path Lh.

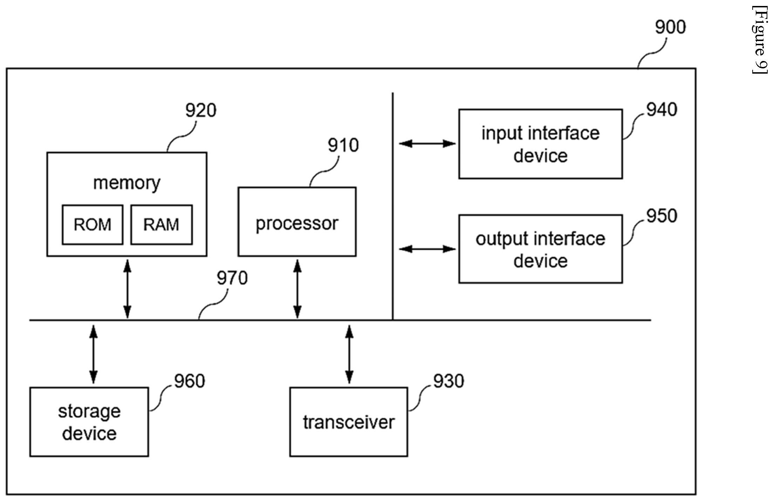

FIG. 9 is a block diagram of a controller according to embodiments of the present invention.

The controller 900 according to embodiments of the present invention may be located within a battery management apparatus, which is provided corresponding to each of the battery assemblies and is connected in series to a plurality of heaters arranged on a heater driving path.

The controller 900 may include at least one processor 910, a memory 920 that stores at least one instruction executed by the processor, and a transceiver 930 that is connected to a network and performs communication.

T he at least one instruction may include an instruction to control a heater drive switch arranged on the heater drive path to simultaneously turn on the heaters; an instruction to measure a current value flowing along the heater drive path; and an instruction to determine whether there is an abnormality in the heater or the heater drive path based on the measured current value.

The instruction to determine whether there is an abnormality includes an instruction to determine whether there is an abnormality in the heater or the heater drive path based on whether the measured current value falls outside a threshold range which is predetermined based on a voltage applied to the heaters and resistance values of the heaters.

The instruction to determine whether there is an abnormality includes an instruction to determine that an open fault has occurred in the heater or the heater drive path, if the measured current value is below a predetermined first threshold current value.

The instruction to determine whether there is an abnormality includes an instruction to determine that a resistance change in the heater or a short-circuit fault in the heater drive path has occurred, if the measured current value exceeds a predetermined second threshold current value.

One end of the heater drive path is connected to the positive line of the battery system, the other end of the heater drive path is connected to the negative line of the battery system, and the heaters are driven by voltages output from batteries included in each of the battery assemblies.

The battery management apparatus may include a current sensor that calculates a current value flowing through a first shunt resistor and a second shunt resistor arranged on the positive line or the negative line. Here, one end or the other end of the heater drive path is connected between the first shunt resistor and second shunt resistor.

The instruction to measure the current value flowing along the heater drive path includes an instruction to calculate a current value flowing through the heater drive path based on a difference between a first current value flowing through the first shunt resistor and a second current value flowing through the second shunt resistor.

The instruction to measure the current value flowing along the heater drive path includes an instruction, upon the battery system in charge mode, to calculate the current value flowing through the heater drive path by subtracting the first current value from the second current value, and upon the battery system in discharge mode, to calculate the current value flowing through the heater drive path by subtracting the second current value from the first current value.

The controller 900 may further include an input interface device 940, an output interface device 950, a storage device 960, etc. Respective components included in the controller 900 may be connected to each other by a bus 970 and communicate with each other.

Here, the processor 910 may mean a central processing unit (CPU), a graphics processing unit (GPU), or a dedicated processor on which methods according to embodiments of the present invention are performed.

Furthermore, the memory may include at least one of a volatile/transitory storage medium and a non-volatile/non-transitory storage medium. For example, the memory may include at least one of a read-only memory (ROM) and a random access memory (RAM), and may include an Electrically Erasable Programmable Read-only Memory (EEPROM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

The operations of the method according to embodiments of the present invention may be implemented in various forms related to programs, such as a computer program or code itself, or a computer program product.

Furthermore, the computer-readable recording medium may include one or more of a volatile/transitory recording medium and a non-volatile/non-transitory recording medium.

In addition, the computer-readable recording medium may include hardware devices specially configured to store and execute program instructions, such as ROM, RAM, flash memory, and may include, for example, various types of servers located on a network. The program instructions may include not only machine language codes, such as those created by a compiler, but also high-level language codes that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A battery system comprising:
a plurality of battery assemblies;
a plurality of heaters, each corresponding to one of the battery assemblies and connected in series along a heater drive path; and
a battery management apparatus configured to monitor and manage the battery assemblies and the heaters,
wherein the battery management apparatus controls a heater drive switch arranged on the heater drive path to simultaneously turn the heaters ON or OFF.

2. The battery system of claim 1, wherein the battery management apparatus measures a current value flowing along the heater drive path when the heater drive switch is switched to a closed state and determines whether there is an abnormality in the heater or the heater drive path based on the measured current value.

3. The battery system of claim 2, wherein the battery management apparatus determines whether there is an abnormality in the heater or the heater drive path based on whether the measured current value falls outside a threshold range predetermined based on a voltage applied to the heaters and resistance values of the heaters.

4. The battery system of claim 2, wherein the battery management apparatus determines that an open fault has occurred in the heater or the heater drive path if the measured current value is below a predetermined first threshold current value.

5. The battery system of claim 2, wherein the battery management apparatus determines that a resistance change in the heater or a short-circuit fault in the heater drive path has occurred, if the measured current value exceeds a predetermined second threshold current value.

6. The battery system of claim 1, wherein one end of the heater drive path is connected to the positive line of the battery system,
the other end of the heater drive path is connected to the negative line of the battery system, and
the heaters are driven by voltages output from batteries included in each of the battery assemblies.

7. The battery system of claim 6, wherein the battery management apparatus includes:
a current sensor that calculates a current value flowing through a first shunt resistor and a second shunt resistor arranged on the positive line or the negative line,
wherein one end or the other end of the heater drive path is connected between the first shunt resistor and second shunt resistor.

8. The battery system of claim 7, wherein the battery management apparatus calculates a current value flowing through the heater drive path based on a difference between a first current value flowing through the first shunt resistor and a second current value flowing through the second shunt resistor.

9. The battery system of claim 8, wherein the battery management apparatus is further configured to:
upon the battery system in charge mode, calculate the current value flowing through the heater drive path by subtracting the first current value from the second current value, and
upon the battery system in discharge mode, calculate the current value flowing through the heater drive path by subtracting the second current value from the first current value.

10. A method of operating a battery system, by a battery management apparatus connected to a plurality of heaters, each corresponding to one of the battery assemblies and arranged being connected in series along a heater drive path, the method comprising:
controlling a heater drive switch arranged on the heater drive path to simultaneously turn on the heaters;
measuring a current value flowing along the heater drive path; and
determining whether there is an abnormality in the heater or the heater drive path based on the measured current value.

11. The method of claim 10, wherein the determining whether there is an abnormality includes:
determining whether there is an abnormality in the heater or the heater drive path based on whether the measured current value falls outside a threshold range predetermined based on a voltage applied to the heaters and resistance values of the heaters.

12. The method of claim 11, wherein the determining whether there is an abnormality includes:
determining that an open fault has occurred in the heater or the heater drive path, if the measured current value is below a predetermined first threshold current value.

13. The method of claim 11, wherein the determining whether there is an abnormality includes:
determining that a resistance change in the heater or a short-circuit fault in the heater drive path has occurred, if the measured current value exceeds a predetermined second threshold current value.

14. The method of claim 10, wherein one end of the heater drive path is connected to the positive line of the battery system,
the other end of the heater drive path is connected to the negative line of the battery system, and
the heaters are driven by voltages output from batteries included in each of the battery assemblies.

15. The method of claim 14, wherein the battery management apparatus includes:
a current sensor that calculates a current value flowing through a first shunt resistor and a second shunt resistor arranged on the positive line or the negative line,
wherein one end or the other end of the heater drive path is connected between the first shunt resistor and second shunt resistor.

16. The method of claim 15, wherein the measuring of the current value flowing along the heater drive path includes:
calculating a current value flowing through the heater drive path based on a difference between a first current value flowing through the first shunt resistor and a second current value flowing through the second shunt resistor.

17. The method of claim 16, wherein the measuring of the current value flowing along the heater drive path includes:
upon the battery system in charge mode, calculating the current value flowing through the heater drive path by subtracting the first current value from the second current value, and
upon the battery system in discharge mode, calculating the current value flowing through the heater drive path by subtracting the second current value from the first current value.

18. A controller located in a battery management apparatus that is connected to a plurality of heaters, each corresponding to one of the battery assemblies and connected in series along a heater drive path, the controller comprising:
at least one processor; and
a memory configured to store at least one instruction executed by the at least one processor,
wherein the at least one instruction includes:
an instruction to control a heater drive switch arranged on the heater drive path to simultaneously turn on the heaters;
an instruction to measure a current value flowing along the heater drive path; and
an instruction to determine whether there is an abnormality in the heater or the heater drive path based on the measured current value.

19. A computer-readable medium having recorded thereon a program for executing the method of any one of claims 10 to 17 on a computer.
